# EUROPEAN PATENT SPECIFICATION

(11) **EP 3 727 009 B1**
(45) Date of publication and mention of the grant of the patent: **04.09.2024**
(21) Application number: 18842480.8
(22) Date of filing: 21.12.2018
(51) Int. Cl.: A23G 3/38, A23G 3/42, A23G 3/54

(54) **CHEWY CONFECTIONARY PRODUCT COMPRISING ERYTHRITOL**
KAUBARES KONFEKTPRODUKT MIT ERYTHRIT
PRODUIT DE CONFISERIE À MÂCHER COMPRENANT DE L'ÉRYTHRITOL

(30) Priority: 21.12.2017 NL 2020146
(43) Date of publication of application: 28.10.2020
(73) Proprietor: CLOETTA HOLLAND B.V., 4903 SC Oosterhout (NL)
(72) Inventor: DRIESSE, Marianne, 6911 CD Pannerden (NL); VAN DER SCHAAF, André, 8502 BP Joure (NL); SIJBRANDIJ, Anna Geertje, 8332 GJ Steenwijk (NL); VALACH, Milan, 93405 Levice (SK)
(74) Representative: Nederlandsch Octrooibureau
(86) International application number: PCT/NL2018/050878
(87) International publication number: WO 2019/125171

(56) References cited:
- EP-A1- 0 430 663
- EP-A1- 0 676 147
- EP-A1- 0 758 528
- EP-A1- 0 800 823
- EP-A2- 0 727 146
- EP-A2- 1 002 466
- EP-B1- 0 430 663
- EP-B1- 0 800 823
- EP-B1- 1 002 466
- WO-A1-2008/100853
- WO-A1-2009/001063
- WO-A1-2016/022629
- US-A1- 2007 116 825
- US-A1- 2009 142 443

## Description

### Field of the invention

The present invention relates to the field of confectionary products, in particular to filled, chewy sugar-free confectionary products comprising erythritol, the manufacturing processes of confectionary products, and to doughs for the confectionary products.

### Background art

There are numerous types of confectionery products, including hard or chewy candy. It is generally known that providing confectionery products having unique flavours and health benefits can lead to enhanced consumer appreciation. Sugarfree confectionary products are therefore an important class of products from a health perspective. In sugarfree chewy confectionery products, sugar is typically replaced by polyols such as isomalt and sorbitol, which have an undesirable laxative effect. Consumption of a reasonable but not excessive amount of chewy candy could therefore already lead to gastrointestinal discomfort. The extensive use of polyols in chewy confectionary products is limited because of this laxative effect, since chewy confectionary products are typically consumed in larger quantities than hard candy. Providing satisfactory sugarfree chewy confectionary products thus remains a challenge in the field.

Erythritol is considered a promising alternative to other polyols, since erythritol does not cause gastrointestinal discomfort. Erythritol is absorbed by the body and secreted via the urinary tract, which avoids gastrointestinal discomfort associated with other polyols. Furthermore, erythritol does not provide any calories to the consumer and does not cause tooth decay, such that two major health concerns of the consumption of sugar-containing confectionery products are avoided when erythritol is used as sweetener. Nevertheless, due to its high tendency to crystallize, erythritol tends to make a grainy or hard product. A further difficulty associated with the use of erythritol in confectionary products is that doughs containing erythritol typically are quite hard such that filling thereof using conventional filling techniques is not possible.

Erythritol-containing confectionery products are known from e.g. US 2010/0112142, EP0800823 and US 2007/116825. In addition, WO 2008/100853 describes jelly confectionary products comprising erythritol while EP1002466 describes a sugar-free icing having reduced calorie content comprising 50 - 100% erythritol. EP0758528 and EP0430663 both describe a chewing gum composition containing erythritol while WO 2009/001063 and EP0727146 both disclose a chocolate composition comprising erythritol. EP0676147 describes a erythritol soft candy which is smooth in texture and US 2009/142443 describes a sugar-free multi-region chewing gum having a solid candy composition and an interior soft candy region and comprising erythritol.

Because of the problems associated with erythritol, to date no filled chewy sugarfree confectionary product comprising substantial amounts of erythritol have been developed. The present invention provides in this need.

### Summary of the invention

The present inventors have for the first time developed a dough comprising substantial amounts of erythritol, which can be manufactured into a chewy, filled, sugarfree confectionary product. The dough as well as the confectionary product according to the invention comprises erythritol, maltitol, a fat and a hydrocolloid.

The invention further concerns a process for manufacturing the confectionary product according to the invention, which process comprises:
(a) cooking a mixture comprising erythritol, maltitol, hydrocolloid and a fat,
(b) optionally dehydrating the mixture;
(c) preferably dry blending further erythritol with the cooked and optionally dehydrated mixture;
(d) cooling the cooked and optionally dehydrated mixture, prior to, during or after step (c);
(e) pulling the cooled mixture to obtain a dough;
(f) filling the dough with a filling;
(g) shaping the filled dough into single units.

### Detailed description

The present invention concerns in a first aspect a filled chewy sugarfree confectionary product comprising erythritol, maltitol, a fat and a hydrocolloid. In a second aspect, the invention pertains to a process of preparing the confectionary product according to the invention. Disclosed herein is also a dough comprising erythritol, maltitol, a fat and a hydrocolloid, and the use of said dough for preparing a confectionary product. In a last aspect, the invention relates to the field of confectionary products, in particular to filled, chewy sugar-free confectionary products comprising erythritol, the manufacturing processes of confectionary products.

In the context of the present invention, a "confectionary product" refers to a sweet preparation, intended to satisfy the craving for sweet snacks (munchy moment). The confectionery market according to the present invention could be classified as sugar confectionery, which typically also encompasses sugarfree variants. A confectionary product in the context of the present invention could also be referred to as sweets or candy. In one embodiment, the confectionary product according to the invention is a pastille.

The confectionary product according to the invention is filled. Filled confectionary products are known in the art, and are also referred to as "centrefilled". Filled confectionary products are typically pastille-type products having a core (also referred to as filling), which is distinguishable from the dough mass by the consumer. In other words, the filling is noticeably present. The consumer is capable of distinguishing the core and the dough, e.g. visually or due to the difference in mouthfeel of the different textures of the core and the dough. The difference between core and dough may e.g. take the form of a difference in taste, a difference in colour and/or a difference in texture. In one embodiment, the texture of the dough is substantially different from the texture of the core. Typically, the core is liquid or granular while the dough is a solid continuous mass and typically chewy. A difference in texture may for example be experienced as a splash of the liquid filling when chewing on the otherwise solid confectionary product. The confectionary product according to the invention thus comprises a core and a dough, wherein the core is embedded in the dough thus forming the centre of the confectionary product. In the context of the present invention, the terms "core" and "filling" are used interchangeably. The confectionary product according to the invention preferably further comprises a coating, which forms the outer part of the product, although filled confectionary products without such an outer coating are also covered by the present invention. In one particularly preferred embodiment, the confectionary product according to the invention consists of a core and a dough and optionally a coating, most preferably it consists of a core, a dough and a coating.

The confectionary product according to the invention is chewy. In the context of the present invention, chewy confectionary products are chewable by the consumer without breaking. Chewy confectionary products are distinct from brittle products (hard candy), which break upon chewing in many small fragments which cannot be recombined during chewing. Thus, when the consumer chews on the confectionary product according to the invention, the mass of the product remains in one continuous phase and does not break into smaller fragments. The continuous mass may be separated into a few, typically 2 - 10 or 2 - 5, distinct masses that are easily recombined into a single mass during consumption of the product. Such chewy confectionary product may also be referred to as "pastilles". The skilled person will appreciate that although the presence of a coating, in particular a hardcoating, may impart some brittleness to the product, the product as a whole is not considered brittle, since the characteristics of the dough to a much larger extent than those of the coating determine the overall texture and mouthfeel of the product. The characteristics of chewiness of the product thus in particular apply to the dough.

The confectionary product according to the invention is "sugarfree" or "sugarless". Thus, the product is substantially free from sugar. Herein, "sugar" refers to readily digestible monomeric or dimeric carbohydrates, such as sucrose, glucose, fructose, maltose, lactose. A claim that a food product is sugar-free (or similar claims that have the same meaning for the consumer) subject to legal regulations, which may differ between jurisdictions. For example in the EU, such a claim may only be made where the product contains no more than 0.5 g of sugars per 100 g or 100 ml (REGULATION (EC) No 1924/2006). Thus, in one embodiment, sugarfree means that the confectionary product according to the invention contains at most 0.5 g of sugars per 100 g total weight of the product, preferably at most 0.2 g per 100 g, more preferably at most 0.1 g per 100 g, most preferably 0 g per 100 g.

In a preferred embodiment, the confectionary product according to the invention is fully dissolvable, which refers to products that leave no dissolvable residue in the mouth upon consumption. Such fully dissolvable confectionary products are known in the art. Thus, in one embodiment, the confectionary product according to the invention is not a chewing gum. In one embodiment, fully dissolvable means that less than 1 wt% of the original product remains in solid form in the mouth after 5 minutes of chewing, preferably already after 2 minutes of chewing. The present invention is particularly suitable for fully dissolvable products, as those are typically consumed in larger quantities than chewing gum is. The negative side-effects of polyols other than erythritol are thus more pronounced in fully dissolvable chewy products.

The present invention is applicable to uncoated and coated confectionary products. Uncoated products typically are single-wrapped. In a preferred embodiment, the confectionary product according to the invention is coated, preferably soft-coated, hard-coated and/or sanded. Such coated confectionary products are known in the art. If the product is uncoated, the product could be shape-instable at a certain moisture content, flattening and leaking the filling. Or the product could release moisture, dehydrating and becoming too hard for consumption.

Filled chewy sugarfree confectionary products, such as filled chewy sugarfree fully dissolvable confectionary products, are known in the art. However, to date such products containing substantial amounts of erythritol are unknown. When preparing filled chewy confectionary products, the dough has to meet specific requirements to be suitable. First of all, the dough must have a certain minimum firmness to be capable of being filled and further handled without destroying the product. On one hand, too soft doughs would lead to difficult handling or even destruction of the product, while too firm doughs cannot be filled by conventional filling techniques. When using erythritol in such doughs, it tends to crystallize rapidly, giving rise to hard non-chewy doughs that are undesirable in the context of the present invention. The present inventors have surprisingly found a way to prepare doughs comprising a substantial amount of erythritol which are not hard but instead can be manufactured in chewy confectionary products.

The filled chewy confectionery product has to meet specific requirements to be able to offer a good quality product to the consumer during the entire shelf-life of the product. The filling must be noticeable present, there should be limited moisture transport between the filling and the dough, allowing the product to remain noticeably filled during a certain amount of time. If the moisture transports from the filling into the dough, the product might soften and collapse. If the moisture transports from the dough to the filling, the product might harden and becomes not suitable for consumption.

### Confectionary product

In the description below, all weight percentages are given per total dry weight, except for the moisture content, which is given per total weight (i.e. including moisture).

The erythritol content of the confectionary product according to the invention is in the range of 30 - 80 wt% of the total weight of the product, preferably 35 - 70 wt%, more preferably 40 - 60 wt%. In the dough, erythritol content is preferably in the range of 20 - 70 wt% of the total weight of the product, more preferably 30 - 50 wt%.

The confectionary product according to the invention comprises a dough, in which the core is embedded. In one embodiment, the dough comprises erythritol; maltitol, a fat and a hydrocolloid. The dough typically constitutes 60 - 98 wt%, preferably 65 - 95 wt%, most preferably 70 - 90 wt%, of the total weight of the confectionary product according to the invention.

The confectionary product according to the invention comprises a core, which is also referred to as a filling in the art. The core typically constitutes 2-20 wt%, preferably 5 - 15 wt%, of the total weight of the confectionary product according to the invention. In one embodiment, the core is liquid or granular. When the core is liquid, it may contain a syrup, a solution and/or an edible oil, preferably it comprises, more preferably consists of, a syrup, such as maltitol syrup. The liquid core typically has a dry matter content of 75 - 90 wt%. When the core is granular, it preferably comprises, more preferably consists of, granules comprising erythritol. In a preferred embodiment, the core is liquid.

In a preferred embodiment, the confectionary product according to the invention comprises a coating. If present, the coating typically constitutes 5 - 30 wt%, preferably 15 - 25 wt%, of the total weight of the confectionary product according to the invention.

The confectionary product according to the invention comprises a polyol fraction, comprising at least erythritol and maltitol. The polyol fraction typically comprises at least 50 wt% erythritol, preferably at least 65 wt% such as 65 - 90 wt%, more preferably at least 75 wt%, such as 75 - 85 wt%. Typically, the remainder of the polyol fraction is maltitol, although other polyols may also be present, such as glycerine, isomalt, sorbitol, mannitol and/or xylitol. In one embodiment, the polyol fraction consists of erythritol, maltitol and optionally one or more of glycerine, isomalt, sorbitol, mannitol and xylitol. In one embodiment, the polyol fraction consists of erythritol, maltitol and optionally one or more of isomalt, sorbitol, mannitol and xylitol. In one embodiment, the polyol fraction consists of erythritol, maltitol and optionally glycerine and isomalt. In one embodiment, the polyol fraction consists of erythritol, maltitol and optionally isomalt. In one embodiment, the polyol fraction consists of erythritol, maltitol and isomalt. In one embodiment, the polyol fraction consists of erythritol, maltitol, glycerine and isomalt. In one embodiment, the polyol fraction consists of erythritol and maltitol. The polyols can be in any suitable form such as, for example, powders or syrups. The maltitol content in the polyol fraction is preferably at most 60 wt%, more preferably at most 50 wt%, even more preferably at most 30 wt% such as 10 - 30 wt%, most preferably at most 20 wt%, such as 12 - 20 wt%. The content of any polyol other than erythritol and maltitol in the polyol fraction is preferably at most 20 wt%, more preferably at most 10 wt% such as 1 - 8 wt%, most preferably at most 5 wt%, such as 1 - 3 wt%. The confectionary product according to the invention typically has a total polyol content of 50 - 90 wt%, preferably 60 - 80 wt%, more preferably 65 - 85 wt%, based on total weight.

The confectionary product according to the invention preferably contains the lowest possible amounts of components that cause gastrointestinal discomfort, e.g. by stimulating the production of gas. Hence, the content of polyols other than erythritol is preferably kept as low as possible, preferably below 40 wt%, more preferably below 20 wt%, most preferably below 10 wt%.

The confectionary product according to the invention comprises fat. Any known fat suitable to be used in confectionary products can be used, such as canola oil, corn oil, soybean oil, peanut oil, cotton seed oil, coconut oil, safflower oil, sunflower oil, palm kernel oil, hydrogenated palm kernel oil, fractionated palm kernel oil, palm oil, tallow, hydrogenated tallow, hydrogenated, partially hydrogenated and non-hydrogenated vegetable oils, cocoa butter or mixtures thereof. Preferred fats are selected from coconut oil, vegetable oil and palm oil. Preferably, fats having a slip melting point in the range of 20 - 60 °C, more preferably 24 - 55 °C, most preferably 30 - 45 °C, are used. Where fats with a slip melting point of above 55 or above 60 °C were found to provide unsuitably firm doughs, fats with a slip melting point below 60 °C, especially below 45°C, gave satisfactory products, typically in terms of sensory properties, as well as optimal processability and handling of the dough during the manufacture of the confectionary product according to the invention. The confectionary product preferably comprises 0.4 - 20 wt%, more preferably 0.5 - 10 wt%, most preferably 1 - 5 wt% fat, based on dry weight of the confectionary product. The confectionery product may also comprise any suitable emulsifier, such a glycerol monostearate, glycerol triacetate, lecithin, acetylated monoglycerides, fatty acids (e.g. stearic, palmitic, oleic and linoleic acids) or combinations thereof. Preferably, lecithin is present. The confectionary product preferably comprises 0.5 - 20 wt%, more preferably 1-10 wt%, most preferably 2-6 wt% emulsifier, based on total weight of the fat. In a preferred embodiment, the fat and optionally the emulsifier are exclusively contained in the dough.

The confectionary product according to the invention comprises a hydrocolloid. Hydrocolloids are used as texturizer and any hydrocolloid known in the art suitable in this respect may be used, including gelatin, gellan gum, xanthan gum, pectin, carrageenan, cellulose gum, gum Arabic, modified starch or combinations thereof. In a preferred embodiment, the hydrocolloid is selected from gellan gum, xanthan gum, pectin, carrageenan, cellulose gum, gum Arabic, modified starch or combinations thereof. Especially preferred hydrocolloids are selected from gum Arabic, modified starch and combinations thereof. Most preferably, the hydrocolloid comprises at least gum Arabic, optionally in combination with modified starch. In one embodiment, the hydrocolloid does not contain gelatin. In case the confectionary product according to the invention comprises modified starch, the weight ratio erythritol to modified starch is preferably in the range of 5 - 50, more preferably in the range of 8 - 30, most preferably in the range 10 - 20. Within the dough, the weight ratio erythritol to modified starch is preferably in the range of 3 - 40, more preferably in the range of 5 - 25, most preferably in the range 6-15.

The confectionary product according to the invention may comprise further additives, including flavourings, colourings, glazing agents, emulsifiers and heating agents. In a preferred embodiment, the confectionary product according to the invention consists of erythritol, maltitol, a fat and a hydrocolloid, and optionally one or more further additives selected from flavourings, colourings, glazing agents, emulsifiers and heating agents, and optionally water. In one embodiment, the confectionary product comprises a heating agent, preferably glycerol. The presence of a minor amounts of a heating agent such as glycerol reduces the chilling effect of the polyol fraction, that is observed during consumption of the confectionary product. Polyols are generally recognized as cooling agents. Glazing agents can be used as known in the art, e.g. in the coating of the confectionary product according to the invention to provide a desirable appearance. Flavourings and/or colourings can be used as known in the art, in order to provide the desired appearance and taste.

The moisture content of the confectionary product is 3 - 15 wt%, more preferably 4-10 wt%, most preferably 4.5 - 5.5 wt%, based on total weight of the product. In the dough, the moisture content is typically in the range of 2 - 10 wt%, preferably 4-6 wt%. Such moisture contents have been found to ensures a soft, firm, chewable filled product. These moisture contents set the confectionary product according to the invention apart from other confectionary products, such as jellies (e.g. wine gums) and marshmallows, which typically have a moisture content above 15 wt%, and toffees, nougats and hard or hard boiled candy, which typically have a moisture content below 5 wt% or even below 3 wt%. Within the narrow range of 4.5 - 5.5 wt% moisture, based on total weight of the product, the most optimal results in terms of texture were obtained. Especially preferred compositions of the confectionary product is given in the table below, wherein the product comprises, preferably consists of, optionally together with some water, the following:

| | general | preferred | most preferred |
|---|---|---|---|
| Erythritol | 30 - 80 wt% | 35 - 70 wt% | 40 - 55 wt% |
| Maltitol | 10 - 50 wt% | 15 - 40 wt% | 25 - 38 wt% |
| Xylitol | 0 - 15 wt% | 4 - 12 wt% | 6 - 10 wt% |
| Glycerin | 0 - 5 wt% | 0 - 1 wt% | 0.05 - 0.15 wt% |
| Modified starch | 0 - 12 wt% | 1 - 8 wt% | 2.5 - 5 wt% |
| Gum Arabic | 0.5 - 20 wt% | 2 - 10 wt% | 4 - 7 wt% |
| Fat | 0.5 - 10 wt% | 1 - 5 wt% | 1.5 - 3 wt% |
| Lecithin | 0 - 5 wt% | 0.001 - 1 wt% | 0.01 - 0.15 wt% |
| Flavourings and colourings | 0 - 5 wt% | 0 - 2 wt% | 0.1 - 1 wt% |

In a preferred embodiment, the confectionary product according to the invention is not a chewing gum. Hence, it is preferred that the confectionary product does not contain substantial amounts of insoluble or inert compounds as known in the art, such as less than 5 wt% insolubles, preferably less than 1 wt% insolubles, most preferably no insolubles at all. In a preferred embodiment, the confectionary product according to the invention is not a chocolate product, meaning that the product preferably does not comprise chocolate and/or an ingredient derived from cacao. In a preferred embodiment, the confectionary product according to the invention is not a jelly or gelatine-based gum, such as a wine gum, meaning that the product preferably does not comprise gelatine.

The dough comprises erythritol, maltitol, a hydrocolloid and a fat. Based on dry weight, the dough typically contains (a) 50 - 95 wt%, preferably 70 - 90 wt%, most preferably 80 - 88 wt% polyols; (b) 3-40 wt%, preferably 5-20 wt%, most preferably 8 - 15 wt% hydrocolloid; and (c) 1 - 15 wt%, preferably 2-10 wt%, most preferably 3-5 wt% fat. The erythritol content in the dough is typically 25 - 75 wt%, preferably 30 - 60 wt%, most preferably 38 - 45 wt% based on dry weight of the dough, and/or 30 - 80 wt%, preferably 40 - 70 wt%, most preferably 45 - 60 wt% based on total weight of the polyol fraction in the dough. The polyol fraction comprised in the dough may contain further polyols in addition to erythritol and maltitol, but optimal results were obtained without further polyols present. It is thus preferred that the polyol fraction comprised in the dough consists of erythritol and maltitol. In one embodiment, the xylitol content in the dough is kept low, which was found to beneficially reduce stickiness of the dough. Preferably, the dough comprises less than 25 wt% xylitol, more preferably less than 15 wt% or even less than 10 wt% xylitol. The hydrocolloid fraction preferably contains gum Arabic and/or modified starch, more preferably gum Arabic and modified starch. The dough may further comprise additives, such as flavourings, colourings, emulsifiers and heating agents. Any flavouring and colouring known in the art to be suitable in the dough of filled chewy sugarfree confectionary products can be used. In one embodiment, the dough consists of polyols, hydrocolloids, fat and optionally one or more additives. In one embodiment, the dough consists of a polyols, hydrocolloids and fat in combination with one or more additives selected from flavourings, colourings, emulsifiers and heating agents. The dough preferably has a moisture content of 3 - 10 wt%, more preferably 5-7 wt%, most preferably 4-6 wt%, based on total weight of the confectionary product, to enable a desirable moisture content of the final product.

In one embodiment, no xylitol is present in the dough. In one embodiment, no isomalt is present in the dough. In one embodiment, no xylitol and isomalt is present in the dough. In one embodiment, the erythritol to maltitol weight ratio is the dough is in the range of 1:5 to 5:1, preferably 1:3 to 3:1, most preferably 2:3 to 3:2.

The inventors found that the best results are obtained when the erythritol content and the moisture content in the dough are carefully balanced. Surprisingly, a greater amount of erythritol could efficiently be incorporated into the dough without jeopardizing its properties when the moisture content was also increased. At the lower erythritol contents, both a moisture content at the lower end of the above range as well as at the higher end of the above range gave optimal results, while for higher erythritol contents, the best results were obtained with higher moisture levels. The moisture content is preferably in the range *X* to 10 wt%, more preferably [*X* + 1] to 8 wt%, most preferably [*X* + 1.5] to 7 wt%, based on total weight of the confectionary product, wherein *X* is defined as 0.05 × [E] + 1, and preferably wherein *X* is at least 3. Herein, [E] refers to the erythritol content of the dough in wt% based on total weight of the polyol fraction in the dough. With such a moisture content, optimal confectionary products were obtained, even at high erythritol content.

According to a preferred embodiment, the dough is obtained by a process containing a pulling step, wherein the dough is subjected to a confectionary pulling machine. According to a further preferred embodiment, the dough is obtained by the process according to the invention as described in further detail below. The use of a blending step as defined below ensures the formation of small erythritol crystals embedded in a polymeric matrix comprising the hydrocolloid. Furthermore, the inventors found that when erythritol is added in two stages, i.e. a first part prior to the cooking step, and a second step during the blending step, provides optimal properties to the final product. Thus, in one embodiment, the dough comprises erythritol crystals having an average particle size of 1 - 250 µm, preferably 5 -150 µm, more preferably 10 -100 µm, embedded in an amorphous polymeric matrix comprising the hydrocolloid. As crystals were found to slowly increase in size upon storage, in one embodiment, the crystal size in the fresh dough (maximally one week old, preferably maximally one day old) is in the range 5 - 75 µm, preferably 10 - 50 µm. This size may be increased to about 10 - 150 µm after 2 months of storage of the dough. Such a structure of the dough ensures that the final confectionary product is advantageously chewy. The use of a confectionery pulling machine gave best results.

In the context of the present invention, particle sizes refer to diameters. In one embodiment, the particle sizes recited herein are average particle sizes, meaning that the average particle size of the product is preferably within the ranges specified herein. In an alternative embodiment, the particle sizes recited herein refer to at least 75 wt%, preferably at least 90 wt% or even at least 95 wt% of the particles having a size within the specified range. The skilled person is capable of determining particle sizes of crystals, e.g. using light microscopy.

The filling preferably has a moisture content below 15 wt%, to enable a desirable moisture content of the final product. Preferably, a liquid filling is used, although granular fillings are also encompassed. Liquid fillings may contain syrups and/or oils, preferably they comprise a sugarfree syrup, such as syrups of maltitol, sorbitol, polydextrose, fructooligosaccharides, inulin or mixtures thereof. Preferably, a maltitol syrup is used in the filling. Typically, the filling comprises 90 - 100 wt%, more preferably 95 - 100 wt%, most preferably 98 - 100 wt% sugarfree syrup. Also granular fillings are suitable, which typically contain crystals of a polyol, such as isomalt or erythritol. Preferably, erythritol crystals are used, which may constitute up to 100 wt% of the granular filling. The filling may further comprise flavourings and/or colourings. Any flavouring and colouring known in the art to be suitable in fillings of filled chewy sugarfree confectionary products can be used. In one embodiment, the filling consists of a sugarfree syrup and optionally flavourings and/or colourings. In one embodiment, the filling consists of a sugarfree syrup in combination with flavourings and/or colourings. In one embodiment, the filling consists of erythritol crystals and optionally flavourings and/or colourings. In one embodiment, the filling consists of erythritol crystals in combination with flavourings and/or colourings.

Both the dough and the filling have a moisture content, which is preferably as defined above. The inventors found that in addition to the moisture content, the water activity (*a*_{w}) of the dough and filling is important for obtaining filled, chewy, sugarfree confectionary products with an optimal shelf life. In case the difference in water activity of the dough and the filling is limited, moisture migration (transport) between dough and filling during storage is limited, allowing the product to remain noticeably filled during prolonged storage. The existence of significant moisture transport from the filling into the dough during storage might soften the product and lead to shape loss. If the moisture significantly transports from the dough to the filling, the product might harden and become unsuitable for consumption (the chewy nature is lost). Thus, in a preferred embodiment, the water activity of the dough and the filling differ by maximally 20 %, more preferably by maximally 10 %, most preferably by maximally 5 %, based on the highest water activity of the two. It is especially preferred that there is no difference (i.e. about 0%) in water activity between the dough and the filling.

The coating preferably has a relative moisture content of at most 5 wt%, preferably at most 1 wt%. The coating preferably comprises polyols, including erythritol. Although less crucial in the coating, it is preferred that some hydrocolloid is present, but typically a smaller amount as in the dough. Based on dry weight, the coating preferably comprises (a) 70 - 100 wt%, more preferably 80 - 98 wt%, most preferably 90 - 96 wt% polyols and 0-30 wt%, more preferably 1-15 wt%, most preferably 2-8 wt% hydrocolloids. The polyol fraction comprises erythritol and preferably at least one other polyol, preferably xylitol. The erythritol content of the coating is preferably at least 50 wt%, more preferably 60 - 90 wt%, most preferably 65 - 80 wt%, based on total weight of the polyol fraction. Based on dry weight of the coating, erythritol is preferably present in at least 50 wt%, more preferably 55 - 80 wt%, most preferably 65 - 75 wt%. The coating may further comprise additives, such as glazing agents, flavourings and/or colourings. Any flavouring and colouring known in the art to be suitable in coatings of confectionary products can be used. Any glazing agent known in the art to be suitable in coatings of confectionary products can be used. In one embodiment, the coating consists of a polyols, hydrocolloids and optionally glazing agents, flavourings and/or colourings. In one embodiment, the coating consists of polyols, hydrocolloids in combination with one or more of glazing agents, flavourings and colourings. The components of the coating recited above may be distributed over a soft coating and a hard coating as known in the art, in case both coatings are applied to the product.

In one embodiment, the confectionary product is obtainable by the process according to the invention, as further defined below. The inventors found that the quality of the dough improved significantly, both in terms of product characteristics (chewiness) and processability of the dough, by virtue of this process, especially in view of the blending of pulling process of step (d).

### Process

In a second aspect, the present invention concerns a process for the manufacture of a confectionary product, comprising at least the following steps:
(a) cooking a mixture comprising erythritol, maltitol, hydrocolloid and a fat,
(b) optionally dehydrating the mixture;
(c) preferably dry blending further erythritol with the cooked and optionally dehydrated mixture;
(d) cooling the cooked and optionally dehydrated mixture, prior to or after step (c);
(e) pulling the cooled mixture to obtain a dough;
(f) filling the dough with a filling;
(g) shaping the filled dough into single units.

In one embodiment, the process further comprises a step (h) of coating the single centres. The confectionary product is obtained in step (g), or in step (h) in case step (h) is performed. The obtained confectionary product is preferably the confectionary product according to the invention as defined above. The obtained confectionary products may further be packaged. Especially in case step (h) is not performed, the packaging of the confectionary products includes a step of single wrapping the confectionary products.

In one embodiment, step (b) is performed directly following step (a), without any significant further alterations to the cooked mixture obtained in step (a). In one embodiment, step (c) is performed directly following step (b), without any significant further alterations to the dehydrated mixture obtained in step (b). In one embodiment, step (d) is performed directly following step (c), without any significant further alterations to the blend obtained in step (c). In one embodiment, step (e) is performed directly following step (d), without any significant further alterations to the cooled dough obtained in step (d). In one embodiment, step (f) is performed directly following step (e), without any significant further alterations to the dough obtained in step (e). In one embodiment, step (g) is performed directly following step (f), without any significant further alterations to the filled dough obtained in step (f). In one embodiment, step (h) is performed directly following step (g), without any significant further alterations to the single units obtained in step (g).

Cooking of the raw materials and dehydration of the mixture in the manufacture of doughs for confectionary products are known in the art, and typically involves the addition of the various raw materials in several steps to a mixing bowl or the like, with intermediate blending steps that may be performed with varying mixing speeds, temperatures and pressures, such that the optimal cooked and dehydrated mixture is obtained. During this blending, elevated temperatures and reduced pressures ensure the mixture is cooked and dehydrated. This procedure is well-known in the art. Any type of cooking system can be used, such as batch cookers and continuous cookers.

The mixture that is cooked in step (a) comprises the components that will form the dough. The mixture-comprises erythritol, maltitol, a hydrocolloid and a fat. Based on dry weight, the mixture typically contains (a) 50 - 95 wt%, preferably 70 - 90 wt%, most preferably 80 - 88 wt% polyols; (b) 3-40 wt%, preferably 5-20 wt%, most preferably 8-15 wt% hydrocolloid; and (c) 1 - 15 wt%, preferably 2-10 wt%, most preferably 3-5 wt% fat. The erythritol content in the mixture is typically 25 - 75 wt%, preferably 30 - 60 wt%, most preferably 38 - 45 wt% based on dry weight of the mixture, and/or 30 - 80 wt%, preferably 35 - 70 wt%, most preferably 40 - 55 wt% based on total weight of the polyol fraction in the mixture. The polyol fraction comprised in the mixture may contain further polyols in addition to erythritol and maltitol, but optimal results were obtained without further polyols present, since that results in desirably high erythritol content of the final confectionary product. It is thus preferred that the polyol fraction comprised in the mixture consists of erythritol and maltitol. The form in which the erythritol is used in step (a) is not relevant, since it is melted anyway during step (a). The hydrocolloid fraction preferably contains gum Arabic and/or modified starch, more preferably gum Arabic and modified starch. The mixture may further comprise additives, such as flavourings, colourings, emulsifiers and heating agents. Any flavouring and colouring known in the art to be suitable in the dough of filled chewy sugarfree confectionary products can be used. In one embodiment, the mixture consists of polyols, hydrocolloids, fat and optionally one or more additives. In one embodiment, the mixture consists of polyols, hydrocolloids and fat in combination with one or more additives selected from flavourings, colourings, emulsifiers and heating agents. As the various components of the mixture may be added at different stages of the mixing and heating regime, the composition of the mixture recited above refers to the final composition when all components are added.

The cooking of step (a) is typically performed at a temperature of 100 - 160 °C, preferably 120 -140 °C. The optimal temperature may depend on the type of flavourings and texturizers used. Excellent results are obtained when a cooking temperature in the range of 130 - 135°C is used. The total time of heating, cooking and dehydrating, i.e. steps (a) and (b), is preferably kept at maximally 20 minutes. Such duration has been found to lead to the desired supersaturated state of the final dough with the desired moisture level. The total time the mixture is at 120 °C or above is preferably kept below 5 minutes, as longer durations may lead to texturizers losing their desirable properties.

Although in case the moisture content of the cooked mixture obtained in step (a) is low enough, step (b) could be omitted, the dehydration of step (b) is preferred performed. During step (b), the moisture in the dough is preferably reduced to 3 - 10 wt%, more preferably 5-9 wt%. Alternatively and especially in case step (c) is not performed, the dehydration of step (b) is continued until a final moisture content of 4 - 6 wt%. Such moisture contents were found to be optimal for further processing of the mixture. In case the amount of water used to prepare the mixture would not exceed the desired value, little or no dehydration would be required.

After step (a), or after step (b) in case this step is performed, the cooked mixture is preferably dry-blended in step (c) with some erythritol, preferably in the form of a powder. The erythritol is preferably used in the form of a powder, more preferably in the form of a fine powder. The powder is preferably rather fine, typically with 95 wt% of the granules having a size of below 200 µm, or even below 150 µm. Without being bound to a theory, it is believed that using small granules, the amount of nucleation sites is sufficiently large that the erythritol crystals in the final product are sufficiently small. With a more coarse powder, nucleation occurs at too few sites such that the resulting crystals are too large and the final product becomes hard. Using a fine erythritol powder during step (c), the final product was found to be chewy. Optimal results were obtained when about 20 - 75 wt%, preferably 40 - 60 wt%, of the total erythritol that is added to the dough is added during step (c). The amount of erythritol used in step (a), as defined above, can then be reduced by the same amount. Upon the dry-blending of step (c), the moisture content of the mixture is further reduced with about 1 %, such that the moisture content of the dry-blended mixture preferably is 2 - 9 wt%, more preferably 4-6 wt%. When combined with the filling, having a typical moisture content of below 15%, and the possibly coating, typically containing hardly any moisture, such a moisture content of the dough gives optimal confectionary products with a final moisture content in the range of 0.5 - 15 wt%, more preferably 3-5 wt%, which ensures a soft, firm, chewable filled product.

Prior to, during or after step (c), the cooked and optionally dehydrated mixture is cooled in step (d). Preferably, the cooling of step (d) is performed after step (c), if this step is performed. Preferably, the mixture is cooled to a temperature below 60 °C, such as to a temperature of 45 - 55 °C. Such a temperature was found to be optimal for performing step (e).

Steps (a), (b), (d), (f) and (g) are in general commonly employed in the manufacture of confectionary products. Step (e) may also be used in the manufacture of confectionary products, although this is not always done. The inventors surprisingly found that when using the specific mixture of raw materials according to the present invention, including erythritol, the use of a pulling step, in particular using a confectionary pulling machine, gave best results in terms of the texture of the obtained dough. The formation of brittle products, that is typically associated with the presence of erythritol, could be completely avoided by using a pulling step, as such enabling the formation of the chewy confectionary product according to the invention. Without being bound to a theory, it is believed that use of a pulling step leads to induced crystallization of the erythritol in the dough, and continuous agitation ensures that the thus formed crystals remain of small size. The presence of the hydrocolloid, fat and water, which surround the erythritol crystals, is believed to keep the crystals isolated and the dough chewy while erythritol is present in a stable crystallized phase.

The pulling of step (e) may be performed by any means known in the art, as long as some pulling effect is applied to the mixture. Pulling effect may be accomplished by agitating the mixture while stirring or by subjecting the mixture to a pulling equipment as known in the art. Suitable pulling equipment includes a twin screw mixer, a z-kneader or a pulling system. The pulling of step (e), especially when performed in a pulling equipment, is preferably performed at a temperature of below 60 °C, such as at a temperature of 45 - 55 °C. The duration of the pulling of step (e) is preferably in the range of 30 - 1200 s, more preferably 60 - 480 s, most preferably 120 - 240 s.

During step (f), the dough originating from step (e) is filled with the filling. Such a filling step is known in the art and any known type can be used in the process of the present invention, such as a cone roller with a filling insert of an extruder with a filling insert. The filled dough is typically obtained as a filled rope, wherein the dough forms the outer part of the rope and the filling the core of the rope. Typically, such a rope is continuously released from the filling equipment and subsequently fed to step (g).

During step (g), the filled dough, typically in the form of a rope, is shaped into single units centres, i.e. individual masses that are processed into individual candies. The obtained units are centrefilled with the filling. Such shaping of filled dough is known in the art and any known type can be used in the process of the present invention, such as a ballformer, rotary die or chain die. Single units may also be referred to as "single centres" or "single products", and refers to individual confectionary products or candies.

The total handling time of the dough during steps (a) - (e) is preferably in the range of 10 min - 12 h, more preferably 30 min - 8 h. The handling time of steps (f) and (g) is less crucial, and although it is typically in the range of 10 - 120 min, preferably 15 - 60 min, handling times of 24 h and up to 48 h have also been proven satisfactory. Such handling times were found to provide optimal results in terms of sufficient crystallization taking place but avoiding excessive hardening of the dough. During the handling of steps (e), (f) and (g), the temperature of the dough is preferably kept above 35 °C, preferably in the range of 38 - 48 °C, to allow proper shaping of the dough in step (g). After shaping the individual units can be cooled to room temperature or lower to ensure good hardening of the unit, prior to coating or packaging, transportation, etc.

The shaped units are preferably coated, preferably soft coated, hard coated and/or sanded, more preferably at least soft coated and most preferably soft coated and subsequently hard coated. Such coating and coating techniques are known in the art and may be applied as deemed fit by the skilled person. In a preferred embodiment, the single centres are soft coated immediately after step (g), typically after cooling of the single units to ambient temperature. The single units obtained in step (g) may be sticky and easily deformable. The presence of a coating as protective layer prevents sticking and deformation. The soft coated products are typically stored at room temperature for at least 24 hours to allow further crystallization and moisture release to take place. After this storage period, the soft coated product is preferably hard coated. Application of a hard coating provides the confectionary product with desirable visual properties and a solid protective layer.

### Examples

The following examples are intended the illustrate the invention.

### Example 1: Manufacture of confectionary products according to the invention

A confectionary product according to the invention was prepared as follows. The ingredients are listed in Table 1. First, the ingredients of the basic mass were mixed and heated to 135 °C. Once the temperature of 135 °C was reached, vacuum was applied to reduce the moisture content of the cooked basic mass to 17 %. Then, the temperature was lowered to 110°C and mix 1, a liquid slurry of fat, water, lecithin and gum Arabic, was added. The slurry was mixed with the basic mass, and moisture was removed by applying vacuum until a moisture level of 8 % was reached. In the meantime, the temperature was allowed to drop to 90 °C. The resulting slurry of basic mass and mix 1 was poured on a cooling roll and transferred into a twin screw mixer. In the twin screw mixer, mix 2, containing fine erythritol and flavourings, was added. The mass was agitated ("pulled") in order to mix the ingredients, effectuate the inclusion of air and induce crystallisation.

The dough was folded and transported to a cone roller/batch roller. The dough was poured from the top and rolled into a cone. In the centre of the cone, a filling lance is positioned, which pump the filling in the centre of the cone with a constant speed. The cone ends in a small diameter releasing a filled rope into the rope sizer and further shaping equipment. Therein, the filled rope was cut in long rods of 2 meter which were emptied on top of three rotating cylinders with ball-shaped indents. Two of the cylinders come together, cutting the rope gently into many balls (the centres) and releasing them upon separating again. The centres were then cooled at 15°C to harden prior to coating. The cooling belt ensured continuous movement of the centres so they did not flatten.

The cooled centres were softcoated directly after cooling to create a protective layer. A softcoating was applied by alternately applying three layers of a gum Arabic solution and a fine erythritol powder. All layers were smoothed by keeping the centres in the rotating drum before addition of the next layer. A drying step was performed in between the application of each coating layer. The softcoated centres were rested for 24 hrs at a temperature of maximum 20 °C. Softcoating added about 10% to the weight of the product. Once the softcoated products were stabilized, a hardcoating was applied. A solution of polyols and gum Arabic was first heated to 100 °C and kept at 85°C during coating. After application of each layer, the candies were dried with conditioned air (18 °C, 4 % moisture). 20 layers were applied resulting in a 10-15% weight addition to the product. The final layer contained glazing agent to create a glossy surface.

**Table 1**

| | Ingredients | Amount (grams) |
|---|---|---|
| Basic mass | Water | 115 |
| | Maltitol syrup (85% dry matter) | 979 |
| | Erythritol crystals | 400 |
| | Modified potato starch 1 | 115 |
| Mix 1 | Fat | 62 |
| | Lecithine | 2,5 |
| | Gum Arabic | 92 |
| | Water | 92 |
| Mix 2 | Glycerine | 3,5 |
| | Erythritol fine (milled) | 400 |
| | Flavourings | 3,5 |
| Filling | Maltitol syrup 85% dm | 200 |
| | Flavourings and colourings | 1,5 |
| Soft coating | Gum Arabic | 40 |
| | Water | 40 |
| | Erythritol fine (milled) | 400 |
| Hard coating | Water | 185 |
| | Gum Arabic | 30 |
| | Xylitol crystals | 240 |
| | Erythritol crystals | 240 |
| | Flavourings and colourings | 7 |

The obtained confectionary product was evaluated by a test panel and rated as excellent. The product was perfectly chewable, not brittle, non-sticky and without a grainy mouthfeel. It took 1 - 2 minutes to reach complete dissolving of the product in the mouth.

### Example 2: Alternative dough processing

Example 1 was repeated with the same ingredients and process steps, only the processing of the dough was different. The fat and lecithin were included in the basic mass and cooked at 135°C, after which vacuum was applied to reduce the moisture content of the cooked basic mass to 8 % and the temperature was allowed to lower to 100 °C. Mix 1, containing water and gum Arabic, was added at 100 °C, after which no vacuum needed to be applied. After 10 minutes of stirring, mix 2 was added. The final slurry containing all ingredients was poured onto a cooling roll and transferred to a pulling system. The pulling system agitated the mass in order to mix the ingredients, effectuate the inclusion of air and induce crystallisation. The resulting dough from the pulling system was suitable to be used in a filling equipment and handled according to example 1.

### Example 3: Alternative filling and shaping techniques

Alternative to the cone roller with filling insert used in example 1, filling could also effectively performed using an extruder. Herein, the dough was fed to the extruder and the extruder head released a rope of dough in any shape. A filling insert was placed at the extruder head, resulting in the release of a filled rope.

Alternative to the ballformer used in example 1, shaping could also effectively performed using a rotary die. Herein, The filled rope was fed into the rotary die, which rotated at high speed. The die contains punches which continuously cut off centres from the filled rope. Rotation speed and cutting were set to settings for chewy candy, which differ from settings for hard boiled candy, as known in the art.

Alternative to the ballformer used in example 1, shaping could also effectively performed using a chain die. The filled rope was fed into a rectangular chain die, which rotated at high speed. The die contains punches which continuously cut off centres from the filled rope. Rotation speed and cutting were set to settings for chewy candy, which differ from settings for hard boiled candy, as known in the art.

### Example 4: Evaluation of optimal polyol composition

Doughs were prepared according to Example 1, up to and including the pulling step. Only the polyol fraction within the dough was varied, and all other variables were kept constant (although some variation in the final moisture content of the dough was observed). Of the obtained doughs, the final moisture content was determined with Karl Fischer titration, and hardness, stickiness, brittleness, dissolving time, shape stability and crystallization time were determined as follows.

Product evaluation panel (3) examined the hardness, stickiness, brittleness and dissolving time. Hardness was assessed on the first bite into the product. The 10 runs with different composition of polyols were ranked in relation to each other. Score 1 relates to a very soft product through which you easily bite with low resistance. Score 5 relates to a medium hard product. Score 10 relates to a hard product where the first bite does not cause an indent in the product, at most a crack. Stickiness was assessed by given a score of 0 = not sticky to hands and teeth or 1 = sticky to hands and teeth. The brittleness was assessed sensorially by the lack of coherence and the amount of pieces in which the product breaks apart during chewing. A product with a score 1 is very coherent and does not fall apart at all, where a product with a score of 10 breaks apart immediately and does not come together to form a single mass during continued chewing. The dissolving time was tested while chewing with the panel using a metronome at 60 beats/minute resulting at 60 chews/minute. The time at which the product disappears (fully dissolved in the mouth) was registered.

Crystallization time indicates the time for the basic mass to become firm after cooking. If this time is very short (< 5 minutes) the product crystallizes too fast to be handled properly on factory scale. If the time is too long (> 60 minutes), the product crystallizes too slow and does not harden during the production process. A shape stability value of 0 indicates the product loses its shape (flattens/deforms during storage/after production). A shape stability value of 1 indicates the product is able to retain its shape until after production.

The results for the various doughs are depicted in Table 2.

**Table 2**

| **Run** | **Polyols *** | | | | **M **** | **Characteristics ***** | | | | | |
|---|---|---|---|---|---|---|---|---|---|---|---|
| | **Mal** | **Xyl** | **Isom** | **Ery** | | **H** | **S** | **B** | **CT** | **SS** | **DT** |
| 1 | 25 | 0 | 0 | 75 | 5.15 | 4 | 0 | 7 | 10 | 1 | 0.5 |
| 2 | 30 | 39 | 0 | 31 | 6.84 | 3 | 1 | 6 | 120 | 1 | 1.0 |
| 3 | 60 | 10 | 30 | 0 | 5.34 | 8 | 1 | 2 | 120 | 0 | 1.75 |
| 4 | 0 | 50 | 0 | 50 | 5.265 | 7 | 0 | 9 | 10 | 1 | 1.01 |
| 5 | 34 | 50 | 16 | 0 | 5.255 | 3 | 1 | 2 | 600 | 0 | 0.65 |
| 6 | 0 | 16 | 9 | 75 | 5.525 | 2 | 0 | 10 | 10 | 1 | 0.5 |
| 7 | 60 | 40 | 0 | 0 | 3.63 | 3,5 | 1 | 2 | 180 | 0 | 1.33 |
| 8 | 56.5 | 5.5 | 1.5 | 36.5 | 4.70 | 8 | 0 | 2 | 60 | 1 | 1.8 |
| 9 | 60 | 0 | 0 | 40 | 5.11 | 6 | 0 | 2 | 60 | 1 | 1.2 |
| 10 | 0 | 0 | 0 | 100 | 1.16 | 6 | 0 | 10 | 5 | 1 | 0.15 |

| | | | | | | | | | | | |
|---|---|---|---|---|---|---|---|---|---|---|---|
| * Composition of the polyol fraction in wt%. Mal = maltitol; Xyl = xylitol; Isom = isomalt; Ery = erythritol. ** Relative moisture content of the dough (in wt%). *** Evaluated parameters: H = hardness; S = stickiness; B = brittleness; CT = crystallization time; SS = shape stability; DT = dissolving time. | | | | | | | | | | | |

The obtained products were of varying quality, ranging from reasonably suitable to excellent. The doughs of runs 3, 6, 14 and 15 scored excellent. The results were analysed with Design-Expert 9 software, which led to the following conclusions. Maltitol and xylitol contents were found to have a greater effect on the hardness as the isomalt and erythritol content. A mixture of xylitol and maltitol both present in high amounts in the recipe causes the products to be undesirably sticky. If the maltitol content is fully eliminated, the product becomes non-sticky. Also the elimination of xylitol gives non-sticky products. Erythritol gives non-sticky products when the erythritol content exceeds a certain level. This applies both to the combination of erythritol with maltitol and erythritol with xylitol. High amounts of erythritol are beneficial, because it reduces the stickiness of the dough and increases the crystallization speed. However, for chewy properties, high amounts of maltitol are preferred, to keep a longer texture and reduced brittleness. The addition ofxylitol does not seem to be beneficial, since it increases the stickiness (in a certain ratio with maltitol) and it slows down the crystallization, making the product less stable prior to shaping. The addition of isomalt does not seem to have a texture effect when used in small amounts, like maltitol does, but can harden the product if it is added in bulk dosage. It was concluded that the most optimal doughs were obtained when the weight ratio maltitol to erythritol was in the range of 2:3 to 3:2, while the content of xylitol and isomalt was kept low.

### Example 5: Factory scale production of confectionary products according to the invention

A confectionery product according to the invention was prepared on factory scale as follows. The ingredients are listed in table 1. Three batches of 200 kg dough (Basic mass + Mix 1 + Mix 2. All ingredients in Table 1 are adjusted to this amount) were prepared. The ingredients for the basic mass were mixed and heated in a batch cooker to 135 °C. At 135 °C, the heat supply (steam) was turned off and vacuum was applied during cooling until a temperature of 115 °C was reached, to reduce the moisture content of the basic mass. Mix 1 + glycerin was added to the basic mass in the batch cooker and mixed at moderate speed. Vacuum was applied until 90°C to reduce the moisture content of the mixture. When the temperature of 90 °C was reached, the flavours were added to the mixture in the batch cooker and mixer for 10 min at low speed. The batch of 140 kg dough was transferred via a cooling wheel to a Z-blade mixer. In the Z-blade mixer malic acid and 35 kg of erythritol powder was added and mixed for 5 min to enhance crystallization.

The dough was transferred to trays and transported to a factory with a production line suitable to produce liquid filled sugarfree chewy candy (Rotary Forming Line - chewy candy configuration). The dough was stored overnight at 40 °C prior to candy manufacture. The moisture content of the dough was 5.3 %. For the filling of the maltitol syrup (85% DM) was transferred to a filling tank of 60 L with continuous stirring and colour and flavour were added to the filling. The crystallized dough was fed into the extruder with screws of Ø100 mm and a temperature controlled chamber and head. The filling is pumped in the extruded dough with a filling unit in the head of the extruder. The temperature of the chamber of the extruder was set on 40°C and the head of the extruder was set on 37°C. The line speed was set to 70 m/min (350 kg/h). The rope of filled dough was led into a rope sizer with 7 calibrator stages. Subsequently the rope was distributed on a relaxation belt to prevent shrinkage during and after forming. The dough was fed into a rotary die set specially designed for filled chewy confectionery products. The special configuration ensures good closure of the centers to prevent leakage. The weight of the centres was 2.2 g per piece and centers with filling percentages of 11 % and 13 % were produced. The produced centers were collected in trays and cooled manually to 15°C with a compressed air cooling device. The cooled centers were transported to a small-scale coating pan and soft coating was applied as described in Example 1. The soft coated products were stored at room temperature and after 24 h a hard coating was applied as described in Example 1.

The obtained products were evaluated by a test panel and rated as excellent. The product was perfectly chewable, not brittle, non-sticky and without a grainy mouthfeel. It took 30-60 s to reach complete dissolution of the product in the mouth. After 10 months of storage at room temperature, these key sensory properties have not noticeable changed.

## Claims

1. A filled chewy sugarfree confectionary product comprising a filling embedded in a dough comprising erythritol, maltitol, a fat and a hydrocolloid, wherein the erythritol content of the confectionary product is in the range of 30 - 80 wt% of the total dry weight of the product and the moisture content is in the range of 3 - 15 wt% of the total weight of the product.

2. The confectionary product according to claim 1, wherein the confectionary product according to the invention consists of erythritol, maltitol, a fat and a hydrocolloid, and optionally one or more further additives selected from flavourings, colourings, glazing agents, emulsifiers and heating agents, and optionally water.

3. The confectionary product according to any one of claims 1 - 2, wherein the filling is liquid or granular, preferably wherein the filling comprises erythritol.

4. The confectionary product according to any one of claims 1 - 3, wherein the dough comprising erythritol and maltitol in a weight ratio of 3:2 to 2:3.

5. The confectionary product according to any one of claims 1 - 4, wherein the dough has a moisture content of 3 - 15 wt%, preferably *X* to 10 wt%, most preferably [*X* + 1.5] to 8 wt% based on total weight of the confectionary product, wherein *X* is defined as 0.05 × [E] + 1, and wherein [E] refers to the erythritol content of the dough in wt% based on total weight of the polyol fraction in the dough.

6. The confectionery product according to any one of claims 1 - 5, wherein the dough comprises erythritol crystals having a size in the range of 5 - 75 µm, when measured maximally one week after preparation thereof.

7. The confectionery product according to any one of claims 1-6, which comprises a coating.

8. The confectionary product according to any one of claims 1-7, which is fully dissolvable.

9. A process for the manufacture of a confectionary product according to any one of claims 1 - 8, comprising:
(a) cooking a mixture comprising erythritol, maltitol, hydrocolloid and a fat,
(b) optionally dehydrating the mixture;
(c) preferably dry blending further erythritol with the cooked and optionally dehydrated mixture;
(d) cooling the cooked and optionally dehydrated mixture, prior to, during or after step (c);
(e) pulling the cooled mixture to obtain a dough;
(f) filling the dough with a filling;
(g) shaping the filled dough into single units.

10. The process according to claim 9, further comprising a step (h) of coating the units, preferably by softcoating, hardcoating and/or sanding.

11. The process according to claim 9 or 10, wherein a cooking temperature in the range of 130 - 135°C is used in step (a).

12. The process according to any one of claims 9 - 11, wherein the total time the mixture is at 120 °C or above is kept below 5 minutes.

13. The process according to any of claims 9 - 12, wherein the total handling time of the dough during steps (a) - (e) is in the range of 10 min - 12 h, preferably 30 min - 8 h.

14. The confectionary product according to any one of claims 1 - 8, which is obtainable by the process according to any one of claims 9-13.

## Patentansprüche

1. Gefülltes, kaubares, zuckerfreies Süßwarenprodukt, das eine Füllung umfasst, die in einen Teig eingebettet ist, der Erythritol, Maltit, ein Fett und ein Hydrokolloid umfasst, wobei der Erythritolgehalt des Süßwarenprodukts im Bereich von 30 bis 80 Gew.-% des Gesamttrockengewichts des Produkts liegt und der Feuchtigkeitsgehalt im Bereich von 3 bis 15 Gew.-% des Gesamtgewichts des Produkts liegt.

2. Süßwarenprodukt nach Anspruch 1, wobei das erfindungsgemäße Süßwarenprodukt aus Erythritol, Maltit, einem Fett und einem Hydrokolloid und gegebenenfalls einem oder mehreren weiteren Zusatzstoffen, ausgewählt aus Geschmacksstoffen, Färbemitteln, Glasurmitteln, Emulgatoren und Erwärmmitteln, und gegebenenfalls Wasser besteht.

3. Süßwarenprodukt nach Anspruch 1 oder 2, wobei die Füllung flüssig oder körnig ist, wobei die Füllung vorzugsweise Erythritol umfasst.

4. Süßwarenprodukt nach einem der Ansprüche 1 bis 3, wobei der Teig Erythritol und Maltit in einem Gewichtsverhältnis von 3:2 bis 2:3 enthält.

5. Süßwarenprodukt nach einem der Ansprüche 1 bis 4, wobei der Teig einen Feuchtigkeitsgehalt von 3 bis 15 Gew.-%, vorzugsweise *X* bis 10 Gew.-%, am meisten bevorzugt [*X* + 1,5] bis 8 Gew.-%, bezogen auf das Gesamtgewicht des Süßwarenprodukts, aufweist, wobei *X* definiert ist als 0,05 × [E] + 1 , und wobei [E] sich auf den Erythritolgehalt des Teigs in Gew.-%, bezogen auf das Gesamtgewicht des Polyolanteils im Teig, bezieht.

6. Süßwarenprodukt nach einem der Ansprüche 1 bis 5, wobei der Teig Erythritolkristalle mit einer Größe im Bereich von 5 bis 75 µm umfasst, wenn er höchstens eine Woche nach seiner Herstellung vermessen wird.

7. Süßwarenprodukt nach einem der Ansprüche 1 bis 6, das einen Überzug enthält.

8. Süßwarenprodukt nach einem der Ansprüche 1 bis 7, das vollständig auflösbar ist.

9. Verfahren zur Herstellung eines Süßwarenprodukts nach einem der Ansprüche 1 bis 8, umfassend:
(a) Kochen einer Mischung, die Erythritol, Maltit, Hydrokolloid und ein Fett enthält,
(b) gegebenenfalls Entwässern der Mischung;
(c) vorzugsweise trockenes Mischen von weiterem Erythritol mit der gekochten und gegebenenfalls entwässerten Mischung;
(d) Abkühlen der gekochten und gegebenenfalls entwässerten Mischung vor, während oder nach Schritt (c);
(e) Ziehen der gekühlten Mischung, um einen Teig zu erhalten;
(f) Füllen des Teigs mit einer Füllung;
(g) Formen des gefüllten Teigs zu einzelnen Einheiten.

10. Verfahren nach Anspruch 9, ferner umfassend einen Schritt (h) des Beschichtens der Einheiten, vorzugsweise durch Weichbeschichten (Softcoating), Hartbeschichten (Hardcoating) und/oder Bestreuen (Sanding).

11. Verfahren nach Anspruch 9 oder 10, wobei in Schritt (a) eine Kochtemperatur im Bereich von 130 bis 135°C verwendet wird.

12. Verfahren nach einem der Ansprüche 9 bis 11, wobei die Gesamtzeit, in der die Mischung bei 120 °C oder darüber liegt, unter 5 Minuten gehalten wird.

13. Verfahren nach einem der Ansprüche 9 bis 12, wobei die Gesamtbearbeitungszeit des Teigs während der Schritte (a) bis (e) im Bereich von 10 min bis 12 h, vorzugsweise 30 min bis 8 h, liegt.

14. Süßwarenprodukt nach einem der Ansprüche 1 bis 9, das durch das Verfahren nach einem der Ansprüche 9 bis 13 erhältlich ist.

## Revendications

1. - Produit de confiserie sans sucre à mâcher, fourré, comprenant un fourrage incorporé dans une pâte comprenant de l'érythritol, du maltitol, une graisse et un hydrocolloïde, la teneur en érythritol du produit de confiserie étant dans la plage de 30 à 80 % en poids du poids sec total du produit et la teneur en humidité étant dans la plage de 3 à 15 % en poids du poids total du produit.

2. - Produit de confiserie selon la revendication 1, dans lequel le produit de confiserie selon l'invention consiste en érythritol, maltitol, une graisse et un hydrocolloïde, et facultativement un ou plusieurs autres additifs choisis parmi les arômes, les colorants, les agents de glaçage, les émulsifiants et les agents chauffants, et facultativement de l'eau.

3. - Produit de confiserie selon l'une quelconque des revendications 1 à 2, dans lequel le fourrage est liquide ou granulaire, de préférence dans lequel le fourrage comprend de l'érythritol.

4. - Produit de confiserie selon l'une quelconque des revendications 1 à 3, dans lequel la pâte comprend de l'érythritol et du maltitol dans un rapport pondéral de 3:2 à 2:3.

5. - Produit de confiserie selon l'une quelconque des revendications 1 à 4, dans lequel la pâte a une teneur en humidité de 3 à 15 % en poids, de préférence de *X* à 10 % en poids, de la façon que l'on préfère le plus de [*X* + 1,5] à 8 % en poids sur la base du poids total du produit de confiserie, *X* étant défini comme 0,05 × [E] + 1, et [E] désignant la teneur en érythritol de la pâte en % en poids sur la base du poids total de la fraction polyol dans la pâte.

6. - Produit de confiserie selon l'une quelconque des revendications 1 à 5, dans lequel la pâte comprend des cristaux d'érythritol ayant une dimension dans la plage de 5 à 75 µm, lorsqu'elle est mesurée au maximum une semaine après sa préparation.

7. - Produit de confiserie selon l'une quelconque des revendications 1 à 6, qui comprend un enrobage.

8. - Produit de confiserie selon l'une quelconque des revendications 1 à 7, qui est entièrement soluble.

9. - Procédé de fabrication d'un produit de confiserie selon l'une quelconque des revendications 1 à 8, comprenant :
a) la cuisson d'un mélange comprenant de l'érythritol, du maltitol, un hydrocolloïde et une graisse ;
b) facultativement la déshydratation du mélange ;
c) de préférence le mélange à sec d'érythritol supplémentaire avec le mélange cuit et facultativement déshydraté ;
d) le refroidissement du mélange cuit et facultativement déshydraté, avant, pendant ou après l'étape (c) ;
e) l'étirement du mélange refroidi pour obtenir une pâte ;
f) le remplissage de la pâte avec un fourrage ;
g) le façonnage de la pâte fourrée en unités individuelles.

10. - Procédé selon la revendication 9, comprenant en outre une étape (h) d'enrobage des unités, de préférence par enrobage souple, enrobage dur et/ou sablage.

11. - Procédé selon l'une des revendications 9 ou 10, dans lequel une température de cuisson dans la plage de 130 à 135°C est utilisée dans l'étape (a).

12. - Procédé selon l'une quelconque des revendications 9 à 11, dans lequel la durée totale pendant laquelle le mélange est à 120°C ou au-dessus est maintenue au-dessous de 5 minutes.

13. - Procédé selon l'une quelconque des revendications 9 à 12, dans lequel la durée totale de manipulation de la pâte pendant les étapes (a) à (e) est dans la plage de 10 min à 12 h, de préférence de 30 min à 8 h.

14. - Produit de confiserie selon l'une quelconque des revendications 1 à 8, qui est susceptible d'être obtenu par le procédé selon l'une quelconque des revendications 9 à 13.
